# EUROPEAN PATENT APPLICATION

(11) **EP 3 633 568 A1**
(43) Date of publication of application: **08.04.2020**
(21) Application number: 18810432.7
(22) Date of filing: 25.05.2018
(51) Int. Cl.: G06Q 10/10

(54) **APPROVAL WORKFLOW ENTRUSTING AND RE-ENTRUSTING METHOD**

(30) Priority: 27.05.2017 CN 201710392909
(71) Applicant: Chengdu Qianniucao Information Technology Co., Ltd, Chengdu, Sichuan 610000 (CN)
(72) Inventor: CHEN, Dazhi, Meishan Sichuan 620000 (CN)
(74) Representative: Bandpay & Greuter
(86) International application number: PCT/CN2018/088481
(87) International publication number: WO 2018/219230

(57) **Abstract**

An approval workflow entrusting method and an approval workflow re-entrusting method are disclosed in the present invention, wherein the entrusting method includes one or more of the following modes: entrusting a user acting as an entrustor to a role acting as a trustee; entrusting a plurality of roles related to a user acting as an entrustor to a user or a role acting as a trustee; entrusting a plurality of forms related to all roles that are related to a user acting as an entrustor to one or more users or roles acting as trustees; entrusting a plurality of approval workflows related to all roles that are related to a user acting as an entrustor to one or more users or roles acting as trustees; and entrusting a plurality of process nodes related to all approval workflows related to all roles that are related to a user acting as an entrustor to one or more users or roles acting as trustees. In the present invention, entrustment can be carried out according to users, roles, forms, approval workflows, and process nodes, thus satisfying entrustment requirements under different circumstances.

## Description

### BACKGROUND

### Technical Field

The present invention relates to a setting and management method for an approval role at an approval node in a workflow in a management software system such as an ERP system, and in particular, to approval workflow entrusting and re-entrusting methods.

### Related Art

Role-based access control (RBAC) is one of the most researched and mature permission management mechanisms for databases in recent years. It is considered to be an ideal candidate to replace conventional mandatory access control (MAC) and discretionary access control (DAC). Conventional discretionary access control has high flexibility but low security. Mandatory access control is highly secure but too restrictive. Role-based access control combines both above, and not only is easy to manage, but also reduces complexity, costs, and probability of errors. Therefore, it has been greatly developed in recent years. The basic idea of role-based access control (RBAC) is to divide different roles according to different functional positions in the enterprise organization view, encapsulate the access permission of database resources in roles, and allow users to indirectly access database resources by assigning different roles to the users.

A large number of tables and views are often built in large-scale application systems, which makes the management and permissions of database resources very complicated. It is very difficult for the user to directly manage the access and permissions of the database resources. It requires the user to have a very thorough understanding of the database structure and to be familiar with the use of the SQL language. Once the application system structure or security requirements have changed, a large number of complex and cumbersome permission changes are required, and the security vulnerabilities caused by unexpected authorization errors are very likely to occur. Therefore, designing a simple and efficient permission management method for large-scale application systems has become a common requirement for systems and system users.

The role-based permission control mechanism can manage the access permissions of the system simply and efficiently, which greatly reduces the burden and cost of the system permission management, and makes the system permission management more compliant with the business management specifications of the application system.

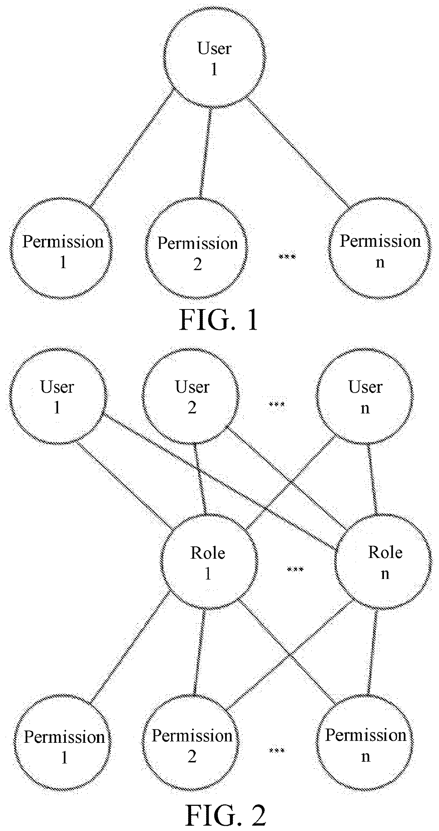

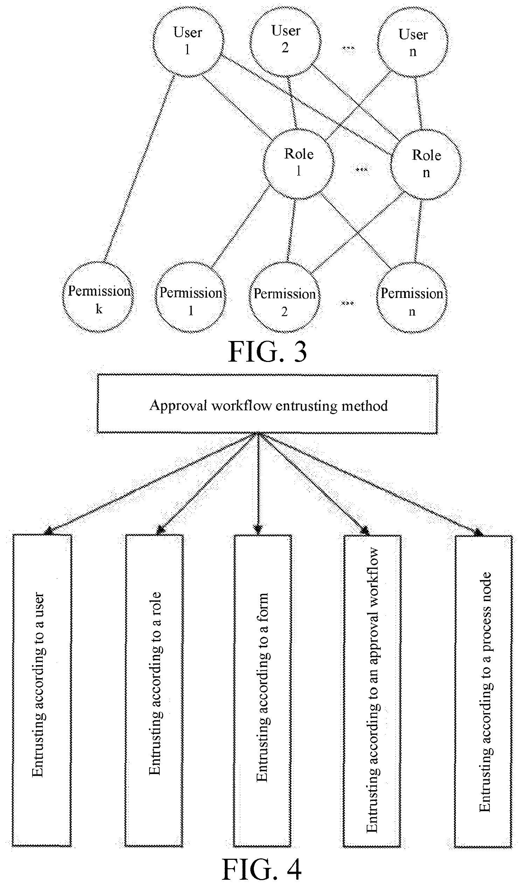

However, the conventional role-based permission management and workflow control methods for a user adopt the "role-to-user one-to-many" relation mechanism, where the "role" is a group or class in nature. That is, one role can simultaneously correspond to or be related to multiple users, and the role is similar to a post or a position or a type of work or other concepts. The permission granted to a user under this relation mechanism is basically divided into the following three forms:
1. As shown in FIG. 1, the permission is directly granted to the user, where the disadvantage is that the workload is large and the operation is frequent and cumbersome. In the approval process, the approval operation subject of the approval node is the user, and at the workflow approval node, an employee or user is selected directly as an approval subject. When changes on the employee have occurred (such as transfer or demission), all processes related to the employee shall be adjusted accordingly. Especially, for changes on an employee in a management position of an enterprise, many approval processes are involved. As the adjustment of the processes involves large workloads and is cumbersome, errors or omissions are likely to occur, affecting the normal operation of the enterprise and even causing unpredictable losses.
   Even if the change only occurs in the approval permissions of the employee, it is still necessary to correspondingly adjust the processes related to the employee, and similar problems described above still occur.
2. As shown in FIG. 2, the role (of a class/group/post/work type nature) is authorized (one role may be related to multiple users), the user obtains permissions through its role, and the approval operation subject is the role of a group or class nature. 3. As shown in FIG. 3, the above two methods are combined.

In the above descriptions, as both 2 and 3 need to authorize the role of a class or group nature. The way of authorization and workflow control through the role of a class/group/post/work type nature has the following disadvantages:
1. Operations are difficult when the user's permission has changed. In the actual process of using a system, the user's permissions often need to be adjusted during the operation process. For example, in processing of the change in an employee's permissions, when the permissions of an employee related to the role have changed, it is improper to change the permissions of the entire role due to the change in the permissions of the individual employee, because this role is also related to other employees whose permissions remain unchanged. To cope with this situation, either a new role is created to fit the employee whose permissions have changed, or permissions are directly granted to the employee (disengaged from the role) based on permission requirements. The above two processing methods not only take a long time but also cause mistakes easily for the role authorization in the case of a large number of role permissions. It is cumbersome for a user to operate, and errors occur easily, resulting in loss to the system user.
   When the approval permissions of the employee or user have changed, either the employee or the user is disengaged from the role, and at the workflow approval node, the employee or the user is directly selected as an approval subject, or a new role is added to meet the requirements of the approval process. In the first way, when changes on an employee have occurred (such as transfer or demission), all processes related to the employee shall be adjusted accordingly. Especially, for changes on an employee in a management position of an enterprise, many approval processes are involved. As the adjustment of the processes involves large workloads, errors or omissions are likely to occur, affecting the normal operation of the enterprise and even causing unpredictable losses. Even if the change only occurs in the approval permissions of the employee, it is still necessary to correspondingly adjust the processes related to the employee, and similar problems described above still occur. In the second way, adding a new role involves creation, relation, and authorization of the role. Especially when there are many roles and many users related to the roles, it is difficult to remember which users are related to the role.
2. It is difficult to remember the specific permissions contained in a role for a long time. If the role has many permission function points, as time goes by, it is difficult to remember the specific permissions of the role, and it is even more difficult to remember the permission differences between roles with similar permissions. The permissions of similar roles are also easily confusable. If a new user needs to be related, it is impracticable to accurately determine how to select a relation.
3. Because user permissions change, more roles will be created (if new roles are not created, direct authorization to the user will be increased greatly), and it is more difficult to distinguish specific differences between permissions of the roles.
4. When a user is transferred from a post, if many permissions of the transferred user need to be assigned to other users, distinguishing the permissions of the transferred user and creating roles to relate to the other users respectively are necessary during the processing. Such operations are not only complicated and time-consuming, but also prone to errors.

In a company, when an employee asks for extended leave due to personal affairs, or takes an annual vocation or attends off-post training, the employee needs to be away from the post for a long time. In this period, the employee cannot process workflow approval in his/her charge. In this case, the workflow approval in the employee's charge needs to be entrusted to others. However, a mode usually used in the prior art is to entrust a user to another user. This entrustment mode has some deficiencies. If an employee A needs to take a long leave and the workflow approval in the employee A's charge involves finance, sales, production, and the like, there is no one in the company can take up all the work of the employee A. In this case, if all the work of the employee A is entrusted to another employee, some work of the employee A cannot be processed normally.

### SUMMARY

### Technical Problems

The object of the present invention is to overcome the deficiencies of the prior art, and provide an approval workflow entrusting method, which can implement entrustment according to users, roles, forms, approval workflows, and process nodes, thus providing multiple entrustment modes to satisfy entrustment requirements under different circumstances.

### Solutions to Problems

### Technical Solutions

The object of the present invention is achieved by the following technical solutions: An approval workflow entrusting method includes one or more of the following modes: entrusting according to a user: entrusting a user acting as an entrustor to a role acting as a trustee; entrusting according to a role: entrusting a role related to a user acting as an entrustor to a user or a role acting as a trustee; or entrusting a plurality of roles related to a user acting as an entrustor to a user or a role acting as a trustee, where each role related to the user acting as the entrustor can only be entrusted to one user or role acting as the trustee; entrusting according to a form: entrusting one form of all forms related to all roles that are related to a user acting as an entrustor to a user or a role acting as a trustee; or entrusting a plurality of forms of all forms related to all roles that are related to a user acting as an entrustor to one or more users or roles acting as trustees, where each form under all roles related to the user acting as the entrustor can only be entrusted to one user or role acting as the trustee; entrusting according to an approval workflow: entrusting one approval workflow of all approval workflows related to all roles that are related to a user acting as an entrustor to a user or a role acting as a trustee; or entrusting a plurality of approval workflows of all approval workflows related to all roles that are related to a user acting as an entrustor to one or more users or roles acting as trustees, where each approval workflow under all roles related to the user acting as the entrustor can only be entrusted to one user or role acting as the trustee; and entrusting according to a process node: entrusting one process node of all process nodes related to all approval workflows related to all roles that are related to a user acting as an entrustor to a user or a role acting as a trustee; or entrusting a plurality of process nodes of all process nodes related to all approval workflows related to all roles that are related to a user acting as an entrustor to one or more users or roles acting as trustees, where each process node related to all approval workflows related to all roles that are related to the user acting as the entrustor can only be entrusted to one user or role acting as the trustee.

Preferably, the entrusting step includes: initiating entrustment: an entrustor initiates entrustment to/sends entrustment to/applies for entrustment from/requests entrustment from a trustee, where the entrustment initiation/sending/application/request includes entrustment content and an entrustment start time; and confirming the entrustment: the trustee confirms to accept or reject the entrustment according to information on the entrustment initiation/sending/application/request.

Preferably, the entrusting step further includes withdrawing the entrustment initiation/sending/application/request: before the trustee confirms the entrustment, the entrustor withdraws the corresponding entrustment initiation/sending/application/request sent to the trustee.

Preferably, the role is an independent individual rather than a group or class, one role can only be related to a unique user during the same period, and one user is related to one or more roles; and the user determines permissions through its relation to the role, one employee corresponds to one user account, and one user account corresponds to one employee.

Preferably, the role belongs to a certain department, and the role is authorized according to work content of the role; a name of the role is unique under the department, and a number of the role is unique in a system.

During cross-department transfer of the user, the user's relation to the role in the original department is canceled, and the user is related to a role in a new department.

The approval workflow includes: one start process node initiating an approval process; at least one approval process node setting an approval role and granting (or setting) an approval permission to the corresponding approval role; and one end process node, at which the approval process is ended.

A re-entrusting method for the approval workflow entrusting includes one or more of the following modes: re-entrusting according to a user: the trustee entrusts a user, the entrustment of which has been accepted by the trustee, to a role acting as a secondary trustee; re-entrusting according to a role: the trustee entrusts one of roles, the entrustments of which have been accepted by the trustee, to a user or a role acting as a secondary trustee; or the trustee entrusts a plurality of roles in roles, the entrustments of which have been accepted by the trustee, to one or more users or roles acting as secondary trustees, where each role, the entrustment of which has been accepted by the trustee, can only be entrusted to one user or role acting as the secondary trustee; re-entrusting according to a form: the trustee entrusts one of forms, the entrustments of which have been accepted by the trustee, to a user or a role acting as a secondary trustee; or the trustee entrusts a plurality of forms in forms, the entrustments of which have been accepted by the trustee, to one or more users or roles acting as secondary trustees, where each form, the entrustment of that has been accepted by the trustee, can only be entrusted to one user or role acting as the secondary trustee; re-entrusting according to an approval workflow: the trustee entrusts one of approval workflows, the entrustments of which have been accepted by the trustee, to a user or a role acting as a secondary trustee; or trustee entrusts a plurality of approval workflows in approval workflows, the entrustments of which have been accepted by the trustee, to one or more users or roles acting as secondary trustees, where each approval workflow, the entrustments of which has been accepted by the trustee, can only be entrusted to one user or role acting as the secondary trustee; and re-entrusting according to a process node: the trustee entrusts one of process nodes, the entrustments of which have been accepted by the trustee, to a user or a role acting as a secondary trustee; or the trustee entrusts a plurality of process nodes in process nodes, the entrustments of which have been accepted by the trustee, to one or more users or roles acting as secondary trustees, where each process node, the entrustments of which has been accepted by the trustee, can only be entrusted to one user or role acting as the secondary trustee.

Preferably, when the trustee carries out re-entrustment in one or more of the following modes: re-entrusting according to a user, re-entrusting according to a role, re-entrusting according to a form, re-entrusting according to an approval workflow, and re-entrusting according to a process node, related information of a corresponding initial entrustor is displayed.

Preferably, when an entrustment relationship between the entrustor and the trustee is terminated, a corresponding entrustment relationship between the trustee and the secondary trustee is terminated.

An approval workflow entrusting method includes one or more of the following modes:
entrusting according to a user: entrusting a user acting as an entrustor to a role acting as a trustee;
entrusting according to a role: entrusting a role related to a user acting as an entrustor to a user or a role acting as a trustee; or entrusting a plurality of roles related to a user acting as an entrustor to a user or a role acting as a trustee;
entrusting according to a form: entrusting one form of all forms related to all roles that are related to a user acting as an entrustor to a user or a role acting as a trustee; or entrusting a plurality of forms of all forms related to all roles that are related to a user acting as an entrustor to one or more users or roles acting as trustees;
entrusting according to an approval workflow: entrusting one approval workflow of all approval workflows related to all roles that are related to a user acting as an entrustor to a user or a role acting as a trustee; or entrusting a plurality of approval workflows of all approval workflows related to all roles that are related to a user acting as an entrustor to one or more users or roles acting as trustees; and
entrusting according to a process node: entrusting one process node of all process nodes related to all approval workflows related to all roles that are related to a user acting as an entrustor to a user or a role acting as a trustee; or entrusting a plurality of process nodes of all process nodes related to all approval workflows related to all roles that are related to a user acting as an entrustor to one or more users or roles acting as trustees.

### Beneficial Effects of the Invention

### Beneficial Effects

The present invention has the following beneficial effects:
(1) When the method of entrusting according to a user is used (that is, what is entrusted is an approval task in an approval workflow related to the user), if roles related to the user acting as the entrustor are increased or decreased, the roles entrusted to the trustee are also increased or decreased, thus avoiding process chaos caused by a change in the roles related to the user acting as the entrustor during the entrustment period. For example, a user corresponding to Zhang San is related to a role A, a role B, and a role C, and a user corresponding to Li Si is related to a role D, a role E, and a role F. When the user corresponding to Zhang San is entrusted to the role D, the role A, the role B, and the role C are all entrusted to the role D (that is, approval tasks in the approval workflow related to the role A, the role B, and the role C are all entrusted to the role D). If the user corresponding to Zhang San is further related to a role G during the entrustment period, the role G is automatically entrusted to the role D. If the role C is deleted from the roles related to the user corresponding to Zhang San during the entrustment period, the role C is also deleted from all the roles entrusted to the role D correspondingly.
(2) When the methods of entrusting according to a role (that is, what is entrusted is an approval task in an approval workflow related to the role), entrusting according to a form (that is, what is entrusted is an approval task in an approval workflow related to the form), entrusting according to an approval workflow (that is, what is entrusted is an approval task in the approval workflow), and entrusting according to a process node (that is, what is entrusted is an approval task at the process node) are used, different modes may be selected according to different requirements for entrustment to a corresponding user or role, so that the entrustment is accepted by the most suitable user or role, thus ensuring that the trustee is capable of completing the corresponding work content. Moreover, work to be entrusted can be entrusted respectively according to current workloads of the trustees, to avoid a dramatic increase in the workloads of the trustees, so that the trustees have energy to complete the corresponding work in time with guaranteed quality. For example, a user corresponding to Zhang San is related to a role A, a role B, and a role C, candidates for the trustee include a user corresponding to Li Si and a user corresponding to Wang Wu, and Li Si cannot process work corresponding to the role B and the role C. Therefore, the role A may be entrusted to the user corresponding to Li Si, and the role B and the role C are entrusted to the user corresponding to Wang Wu. For another example, a user corresponding to Zhang San is related to a role A, a role B, and a role C, and candidates for the trustee include a user corresponding to Li Si and a user corresponding to Wang Wu. Moreover, both Li Si and Wang Wu can process work corresponding to the role A, role B, and role C, and the current workload of Li Si is less than that of Wang Wu. Therefore, the role A and the role B may be entrusted to the user corresponding to Li Si, and the role C is entrusted to the user corresponding to Wang Wu.
   For another example, an approval workflow related to a sales form is entrusted to a sales role, and an approval workflow related to a production form is entrusted to a production role.
(3) In the present invention, only the entrustment start time is set, while no entrustment end time is set, thus avoiding that the entrustor comes back ahead of time and cannot process the corresponding approval and other work, or that the entrustor comes back later than expected and no one processes the corresponding approval and other work during the extended period.
(4) In the present invention, the initial entrustor is displayed during re-entrustment, to provide reference for selection of a next trustee (because the entrusted user/role/form/approval workflow/approval process node can be re-entrusted by the trustee over and again).
(5) The subject of the approval operation in the workflow is the role that is an independent individual rather than a conventional role of a group or class nature. Even if changes on an employee or a user have occurred (such as transfer or demission), it is only necessary to relate the employee to a new role; or if the approval permissions of the employee have changed, it is only necessary to adjust the approval permissions of the role accordingly, but not necessary to reset or adjust processes. As the setting is convenient and no errors or omissions will occur, the normal operation of the enterprise will not be affected, and the reliability of the workflow is greatly improved. The role of a post number nature is taken as the subject of the approval authorization at a node of the approval link. The user determines which approval tasks are available according to the role. The user only needs to perform approval operations based on the permissions of the related role. It is clear and simple to understand that each role of a post number nature or a work station number nature is a minimum unit of the subject of work. The present application can well satisfy different approval requirements of each role.
(6) In the present application, the role is one-to-one related to the user. One role can only be related to a unique user during the same period. The advantage of this is that the permissions can be obtained as long as the user is related to the role (that is, the user obtains the permissions of its related role), and changes in the permissions of the role are much fewer than the changes in the permissions of the user in a conventional mechanism. Few changes occur in the quantity of roles that are each an independent individual in nature (a post number or a work station number in nature). Although there is large employee turnover, few changes occur in the post number/work station number (even there is no change within a certain period, that is, the role does not change). This greatly simplifies user's permission management and reduces system overheads.
(7) The operations such as dynamic management, recruitment, and transfer are simple, convenient, efficient and highly reliable. The application of recruitment or demission or transfer in the approval process is simple. The subject of the approval operation of the workflow is the role. When an employee or a user has changed, the approval process does not need to be reset (it is only necessary for a user to cancel the relation or be related to the role). For the user who is no longer in the role of the post number or work station number, the relation to the role is canceled; and the user who takes over the post number or work station number is related to the role of the post number. Therefore, the user related to the role automatically obtains related tasks and permissions of the role in the approval workflow, without resetting the approval workflow or re-authorizing the role in the workflow, thus greatly improving the efficiency, security, and reliability of the process setting.
   For example, because Zhang San user is transferred or departs from a post, Zhang San no longer works as a role of "purchaser 3", and Zhang San then cancels the relation to the role. Meanwhile, Li Si takes over the work as the role of "purchaser 3", and then Li Si is related to the role, so Li Si automatically obtains the approval tasks and the approval permissions of the role of "purchaser 3" in the approval process.
(8) The conventional permission management mechanism defines the nature of a group, a work type, a class or the like as the role. The role is in a one-to-many relation to the user. In the actual process of using a system, the user's permissions often need to be adjusted during the operation process. For example, in processing of the change in an employee's permissions, when the permissions of an employee related to the role have changed, it is improper to change the permissions of the entire role due to the change of the permissions of the individual employee, because this role is also related to other employees whose permissions remain unchanged. To cope with this situation, either a new role is created to fit the employee whose permissions have changed, or permissions are directly granted to the employee (disengaged from the role) based on permission requirements. The above two processing methods not only take a long time but also cause mistakes easily for the role authorization in the case of a large number of role permissions. It is cumbersome for a user to operate, and errors occur easily, resulting in loss to the system user.
   However, under the method of the present application, as the role is an independent individual, the object can be achieved by changing the permissions of the role. Although the method in the present application seems to increase the workload during system initialization, by means of copying or the like, the role can be created or authorized more efficiently than the conventional roles of a group nature. As it is unnecessary to consider the commonality of the roles of a group nature when satisfying the related users, the solutions in the present application make the permission setting clear and explicit. Especially after the system has been used for a period of time (after the permissions of the user/role have changed dynamically), the solutions in the present application can significantly improve the permission management efficiency for the system user during the use of the system, make the dynamic authorization simpler, more convenient, clearer and more explicit, and improve the efficiency and reliability of the permission setting.
(9) The conventional group-based role authorization method is prone to errors. The method provided in the present application significantly reduces the probability of authorization errors, because the method of the present application only needs to consider the role as an independent individual, without considering the commonality of multiple users related to the role of the group nature under the conventional method. Even if the authorization errors occur, only the user related to the role is affected. However, in the case of the conventional role of the group nature, all users related to the role are affected. Even if the authorization errors occur, the correction method in the present application is simple and takes a short time, while in the case of the conventional role of a group nature, the commonality of the permissions of all users related to the role needs to be considered during the error correction. The modification is cumbersome, complex, and error-prone when the role has many function points, and in many cases, the problem cannot be solved unless a new role is created.
(10) In the conventional group-based role authorization method, if the role has many permission function points, as time goes by, it is difficult to remember specific permissions of the role, and it is even more difficult to remember the differences in permissions between roles with similar permissions. If a new user needs to be related, it cannot be accurately determined how to select a relation. In the method of the present application, the role itself has a nature of a post number or work station number, such that the selection can be made easily.
(11) When a user is transferred from a post, if many permissions of the transferred user need to be assigned to other users, in processing, distinguishing the permissions of the transferred user and creating roles to relate to other users respectively are necessary. The operations are complicated, time-consuming, and prone to errors.
   The method in the present application is as follows: The transferred user is related to several roles. When the user is transferred, the relation between the user and the roles in the original department is first canceled (the canceled roles may be re-related to other users), and then the user is related to a role in a new department. The operation is simple and not error-prone.
(12) The role belongs to a department, and then the department to which the role belongs cannot be replaced. Reasons why the department to which the role belongs cannot be replaced are as follows. Reason 1: As the role in the present application is equivalent to a work station number or a post number in nature, different work station numbers or post numbers have different work content or permissions. For example, a role of a salesperson 1 under a sales department and a role of a developer 1 under a technical department are two completely different work station numbers or post numbers, and have different permissions. Reason 2: If the department (sales department) to which the role of the salesperson 1 belongs is replaced by the technical department without changing the permissions of the role of the salesperson 1, a role that owns the permissions of the sales department exists in the technical department. This leads to management confusion and security vulnerabilities.

### BRIEF DESCRIPTION OF THE DRAWINGS

### DESCRIPTION OF THE DRAWINGS

FIG. 1 is a schematic diagram in which a system directly authorizes a user in the prior art;
FIG. 2 is a schematic diagram in which a system authorizes a role of a group or class nature in the prior art;
FIG. 3 is a schematic diagram in which a system both directly authorizes a user and authorizes a role of a group or class nature in the prior art;
FIG. 4 shows an approval workflow entrusting method according to the present invention;
FIG. 5 is a schematic diagram of an approval workflow; and
FIG. 6 is a re-entrusting method for the approval workflow entrusting according to the present invention

### DETAILED DESCRIPTION

### Description of Embodiments

The technical solutions of the present invention will be described in further detail below with reference to the accompanying drawings, but the protection scope of the present invention is not limited to the following descriptions.

[Embodiment 1] As shown in FIG. 4, an approval workflow entrusting method includes one or more of the following modes: entrusting according to a user, entrusting according to a role, entrusting according to a form, entrusting according to an approval workflow, and entrusting according to a process node.

Entrusting according to a user: entrusting a user acting as an entrustor to a role acting as a trustee, that is, entrusting an approval workflow related to a user acting as an entrustor to a role acting as a trustee. In addition, a user acting as an entrustor may also be entrusted to a user acting as a trustee.

For example, a user corresponding to Zhang San is related to a role A, a role B, and a role C, and a user corresponding to Li Si is related to a role D, a role E, and a role F. When the user corresponding to Zhang San is entrusted to the role D, the role A, the role B, and the role C are all entrusted to the role D (that is, approval tasks of the role A, the role B, and the role C in the approval workflow related to the role A, the role B, and the role C are all entrusted to the role D). If the user corresponding to Zhang San is further related to a role G during the entrustment period, the role G is automatically entrusted to the role D. If the role C is deleted from the roles related to the user corresponding to Zhang San during the entrustment period, the role C is also deleted from all the roles entrusted to the role D correspondingly. Similarly, when the user corresponding to Zhang San is entrusted to the user corresponding to Li Si, the role A, the role B, and the role C are all entrusted to the user corresponding to Li Si. If the user corresponding to Zhang San is further related to a role G during the entrustment period, the role G is automatically entrusted to the user corresponding to Li Si. If the role C is deleted from the roles related to the user corresponding to Zhang San during the entrustment period, the role C is also deleted from all the roles entrusted to the user corresponding to Li Si correspondingly.

When the method of entrusting according to a user is used, if roles related to the user acting as the entrustor are increased or decreased, the roles entrusted to the trustee are also increased or decreased, thus avoiding process chaos caused by a change in the roles related to the user acting as the entrustor during the entrustment period.

Entrusting according to a role: entrusting a role related to a user acting as an entrustor to a user or a role acting as a trustee; or entrusting a plurality of roles related to a user acting as an entrustor to a user or a role acting as a trustee, where each role related to the user acting as the entrustor can only be entrusted to one user or role acting as the trustee. That is, all approval workflows related to all roles that are related to the user acting as the entrustor are entrusted to the user or role acting as the trustee. For example, a user corresponding to Zhang San is related to a role A, a role B, and a role C, a user corresponding to Li Si is related to a role D, a role E, and a role F, and a user corresponding to Wang Wu is related to a role G and a role H.

When the role A, the role B, and the role C are all entrusted to a user or role acting as a trustee, the role A, the role B, and the role C are all entrusted to the user corresponding to Li Si, or the role A, the role B, and the role C are all entrusted to the role H.

When the role A, the role B, and the role C are entrusted to a plurality of users or roles acting as trustees, the role A and the role B are entrusted to the user corresponding to Li Si, and the role C is entrusted to the user corresponding to Wang Wu; or the role A and the role B are entrusted to the role E, and the role C is entrusted to the role G; or the role A and the role B are entrusted to the user corresponding to Li Si, and the role C is entrusted to the role G.

When the method of entrusting according to a role is used, roles with different work content may be entrusted to a corresponding user or role, so that each role is entrusted to the most suitable user or role, thus ensuring that the trustee is capable of completing the corresponding work content.

Entrusting according to a form: entrusting one form of all forms related to all roles that are related to a user acting as an entrustor to a user or a role acting as a trustee; or entrusting a plurality of forms of all forms related to all roles that are related to a user acting as an entrustor to one or more users or roles acting as trustees, where each form under all roles related to the user acting as the entrustor can only be entrusted to one user or role acting as the trustee. That is, approval workflows related to all the forms under all the roles that are related to the user acting as the entrustor are entrusted to the user or role acting as the trustee. On or more approval workflows need to be set for forms used for the workflow approval.

For example, all forms under all roles that are related to a user corresponding to Zhang San are a form A, a form B, and a form C, a user corresponding to Li Si is related to a role D, a role E, and a role F, and a user corresponding to Wang Wu is related to a role G and a role H.

When the form A, the form B, and the form C are all entrusted to a user or a role acting as a trustee, the form A, the form B, and the form C are all entrusted to the user corresponding to Li Si, or the form A, the form B, and the form C are all entrusted to the role H.

When the form A, the form B, and the form C are entrusted to a plurality of users or roles acting as trustees, the form A and the form B are entrusted to the user corresponding to Li Si, and the form C is entrusted to the user corresponding to Wang Wu; or the form A and the form B are entrusted to the role E, and the form C is entrusted to the role G; or the form A and the form B are entrusted to the user corresponding to Li Si, and the form C is entrusted to the role G.

For example, all forms under all the roles related to the user corresponding to Zhang San are a contract form, a reimbursement form, and a production form; the contract form may be entrusted to a sales manager A, the reimbursement form may be entrusted to an administrative supervisor B, and the production form may be entrusted to a workshop supervisor C.

Entrusting according to an approval workflow: entrusting one approval workflow of all approval workflows related to all roles that are related to a user acting as an entrustor to a user or a role acting as a trustee; or entrusting a plurality of approval workflows of all approval workflows related to all roles that are related to a user acting as an entrustor to one or more users or roles acting as trustees, where each approval workflow under all roles related to the user acting as the entrustor can only be entrusted to one user or role acting as the trustee.

For example, approval workflows under all roles related to a user corresponding to Zhang San are an approval workflow A, an approval workflow B, and an approval workflow C, a user corresponding to Li Si is related to a role D, a role E, and a role F, and a user corresponding to Wang Wu is related to a role G and a role H.

When the approval workflow A, the approval workflow B, and the approval workflow C are all entrusted to a user or a role acting as a trustee, the approval workflow A, the approval workflow B, and the approval workflow C are all entrusted to the user corresponding to Li Si, or the approval workflow A, the approval workflow B, and the approval workflow C are all entrusted to the role H.

When the approval workflow A, the approval workflow B, and the approval workflow C are entrusted to a plurality of users or roles acting as trustees, the approval workflow A and the approval workflow B are entrusted to the user corresponding to Li Si, and the approval workflow C is entrusted to the user corresponding to Wang Wu; or the approval workflow A and the approval workflow B are entrusted to the role E, and the approval workflow C is entrusted to the role G; or the approval workflow A and the approval workflow B are entrusted to the user corresponding to Li Si, and the approval workflow C is entrusted to the role G.

For example, all approval workflows under all the roles related to the user corresponding to Zhang San are a standard device approval workflow and a customized device approval workflow; the standard device approval workflow may be entrusted to a sales supervisor A, and the customized device approval workflow may be entrusted to a sales manager B.

Entrusting according to a process node: entrusting one process node of all process nodes related to all approval workflows related to all roles that are related to a user acting as an entrustor to a user or a role acting as a trustee; or entrusting a plurality of process nodes of all process nodes related to all approval workflows related to all roles that are related to a user acting as an entrustor to one or more users or roles acting as trustees, where each process node related to all approval workflows related to all roles that are related to the user acting as the entrustor can only be entrusted to one user or role acting as the trustee.

For example, all process nodes in all approval workflows under all roles related to a user corresponding to Zhang San are a process node A, a process node B, and a process node C, a user corresponding to Li Si is related to a role D, a role E, and a role F, and a user corresponding to Wang Wu is related to a role G and a role H.

When the process node A, the process node B, and the process node C are all entrusted to a user or a role acting as a trustee, the process node A, the process node B, and the process node C are all entrusted to the user corresponding to Li Si, or the process node A, the process node B, and the process node C are all entrusted to the role H.

When the process node A, the process node B, and the process node C are entrusted to a plurality of users or roles acting as trustees, the process node A and the process node B are entrusted to the user corresponding to Li Si, and the process node C is entrusted to the user corresponding to Wang Wu; or the process node A and the process node B are entrusted to the role E, and the process node is entrusted to the role G; or the process node A and the process node B are entrusted to the user corresponding to Li Si, and the process node C is entrusted to the role G.

For example, one approval workflow under all roles related to the user corresponding to Zhang San includes a process node A, a process node B, and a process node C; the process node A and the process node B may be entrusted to a sales supervisor A, and the process node C may be entrusted to a manager B.

The entrusting step includes: initiating entrustment: an entrustor initiates entrustment to/sends entrustment to/applies for entrustment from/requests entrustment from a trustee, where the entrustment initiation/sending/application/request includes entrustment content and an entrustment start time; and confirming the entrustment: the trustee confirms to accept or reject the entrustment according to information on the entrustment initiation/sending/application/request.

The trustee may choose whether to accept the entrustment or not according to his/her capability and work saturation, to avoid that the trustee cannot complete the entrusted work because the entrustment has to be accepted. In addition, only the entrustment start time is set in the entrustment information, while no entrustment end time is set, thus avoiding that the entrustor comes back ahead of time and cannot process the corresponding approval and other work, or that the entrustor comes back later than expected and no one processes the corresponding approval and other work during the extended period.

The entrusting step further includes withdrawing the entrustment initiation/sending/application/request: before the trustee confirms the entrustment, the entrustor withdraws the corresponding entrustment initiation/sending/application/request sent to the trustee. In this way, if the entrustor finds a better trustee before the current trustee accepts the entrustment, the entrustor can withdraw the entrustment and carry out entrustment again.

The role is an independent individual rather than a group or class, one role can only be related to a unique user during the same period, and one user is related to one or more roles.

The user determines permissions through its relation to the role, one employee corresponds to one user account, and one user account corresponds to one employee.

Definition of a role: A role is not of the nature of a group/class/category/post/position/work type or the like, but is of a non-collective nature. The role is unique and is an independent individual. Applied in an enterprise or an institution, the role is equivalent to a post number (the post number herein is not a post, and one post may have multiple employees at the same time, but one post number can only correspond to one employee during the same period).

For example, in a company system, the following roles may be created: a general manager, a deputy general manager 1, a deputy general manager 2, a manager of Beijing sales department I, a manager of Beijing sales department II, a manager of Beijing sales department III, a Shanghai sales engineer 1, a Shanghai sales engineer 2, a Shanghai sales engineer 3, a Shanghai sales engineer 4, a Shanghai sales engineer 5, and so on. The relation between users and roles is as follows: if Zhang San, the company's employee, serves as a deputy general manager 2 of the company and also serves as a manager of Beijing sales department I, roles to which Zhang San needs to be related are the deputy general manager 2 and the manager of Beijing sales department I, and Zhang San owns the permissions of the two roles.

The concept of conventional roles is a group/class/post/position/work type in nature, and one role can correspond to multiple users. However, in the present application, the concept of "role" is equivalent to a post number/work station number, and is also similar to the role in a film and television drama: one role in the same period (in childhood, juvenile, middle-age...) can be played by only one actor or actress at the same time, but one actor or actress may play multiple roles.

The role belongs to a certain department, and the role is authorized according to work content of the role; a name of the role is unique under the department, and a number of the role is unique in a system.

During cross-department transfer of the user, the user's relation to the role in the original department is canceled, and the user is related to a role in a new department. After the role is created, a user may be related to the role in the process of creating the user, or may be related to the role at any time after the user is created. After the user is related to the role, the user can be released from the relation to the role at any time, and the relation between the user and another role may be created at any time.

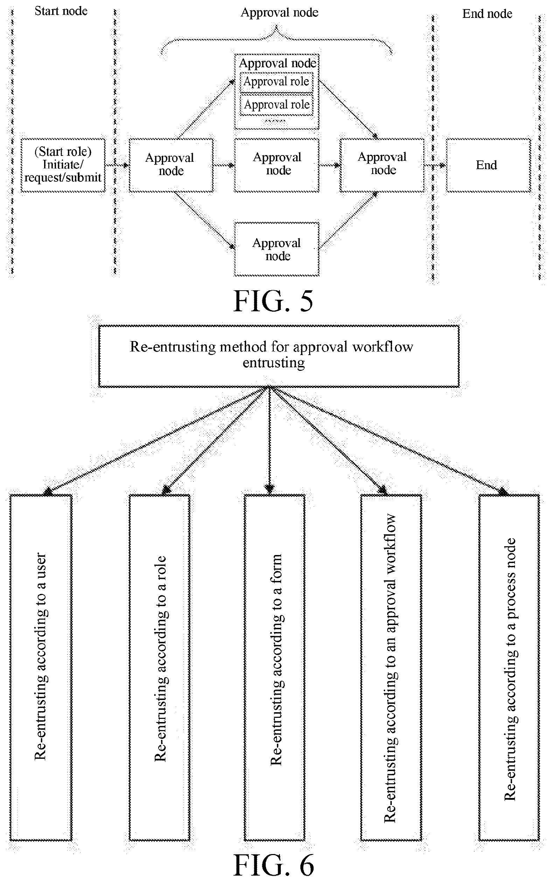

A method for generating the approval workflow includes: building a three-layer structure model of user-role-permission that includes: a role layer, where an operation subject of process approval in the workflow is a role, each role is an independent individual rather than a group or class, one role can only be related to a unique user during the same period, and one user is related to one or more roles; a permission layer composed of permissions required to be used in the execution of the workflow, where the permissions are directly granted to a role; and a user layer, where a user determines an approval task in the workflow through the related role, and performs an approval operation with the permissions of the related role; and using the three-layer structure model to control the approval workflow. As shown in FIG. 5, the approval workflow includes: one start process node, where a node initiating or requesting or submitting the workflow serves as the start node or the first approval node serves as the start node; at least one approval process node granting (or setting) an approval permission to a corresponding approval role; and one end process node, to which the approval process comes and is then ended. The end node does not perform an approval operation, or the last approval node serves as the end node and the end node needs to perform an approval operation.

[Embodiment 2] As shown in FIG. 6, a re-entrusting method for the approval workflow entrusting includes one or more of the following modes: re-entrusting according to a user, re-entrusting according to a role, re-entrusting according to a form, re-entrusting according to an approval workflow, and re-entrusting according to a process node.

Re-entrusting according to a user: the trustee entrusts a user, the entrustment of which has been accepted by the trustee, to a role acting as a secondary trustee. In addition, the trustee entrusts a user, the entrustment of which has been accepted by the trustee, to a user acting as a secondary trustee.

For example, a user corresponding to Zhang San is related to a role A, a role B, and a role C, a user corresponding to Li Si is related to a role D, a role E, and a role F, and a user corresponding to Wang Wu is related to a role G and a role H. When the user corresponding to Zhang San is entrusted to the role D, that is, when the role A, the role B, and the role C are all entrusted to the role D, the trustee may entrust the user corresponding to Zhang San to the role H, that is, the role A, the role B, and the role C are all entrusted to the role H. If the user corresponding to Zhang San is further related to a role J during the entrustment period, the role J is automatically entrusted to the role H; if the role C is deleted from the roles related to the user corresponding to Zhang San during the entrustment period, the role C is also deleted from all the roles entrusted to the role H correspondingly.

Re-entrusting according to a role: the trustee entrusts one of roles, the entrustments of which have been accepted by the trustee, to a user or a role acting as a secondary trustee; or the trustee entrusts a plurality of roles in roles, the entrustments of which have been accepted by the trustee, to one or more users or roles acting as secondary trustees, where each role, the entrustment of which has been accepted by the trustee, can only be entrusted to one user or role acting as the secondary trustee.

For example, a user corresponding to Zhang San is related to a role A, a role B, and a role C, a user corresponding to Li Si is related to a role D, a role E, and a role F, a user corresponding to Wang Wu is related to a role G and a role H, and a user corresponding to Li Er is related to a role J and a role K. When the role A and the role B are entrusted to the role E, and the role C is entrusted to the role G, the entrustor who accepts the entrustment of the role A and the role B can re-entrust the role A and the role B to the role K.

Re-entrusting according to a form: the trustee entrusts one of forms, the entrustments of which have been accepted by the trustee, to a user or a role acting as a secondary trustee; or the trustee entrusts a plurality of forms in forms, the entrustments of which have been accepted by the trustee, to one or more users or roles acting as secondary trustees, where each form, the entrustment of which has been accepted by the trustee, can only be entrusted to one user or role acting as the secondary trustee.

For example, all forms under all roles related to a user corresponding to Zhang San are a contract form, a reimbursement form, and a production form; the contract form may be entrusted to a sales manager A, the reimbursement form may be entrusted to an administrative supervisor B, and the production form may be entrusted to the workshop supervisor C. After the sales manager A accepts the entrustment of the contract form, since workloads of the roles in the sales manager A's charge increase dramatically due to market changes, and the sales manager A cannot process the task of the contract form, the sales manager A may entrust the contract form to a sales manager B.

Re-entrusting according to an approval workflow: the trustee entrusts one of approval workflows, the entrustments of which have been accepted by the trustee, to a user or a role acting as a secondary trustee; or the trustee entrusts a plurality of approval workflows in approval workflows, the entrustments of which have been accepted by the trustee, to one or more users or roles acting as secondary trustees, where each approval workflow, the entrustment of which has been accepted by the trustee, can only be entrusted to one user or role acting as the secondary trustee.

For example, all approval workflows under all roles related to a user corresponding to Zhang San are a standard device approval workflow and a customized device approval workflow; the standard device approval workflow may be entrusted to a sales supervisor A, and the customized device approval workflow may be entrusted to a sales manager B. After the sales manager B accepts the entrustment of the customized device approval workflow, since workloads of the roles in the sales manager B's charge increase dramatically due to market changes, and the sales manager B cannot process the task of the customized device approval workflow, the sales manager B may entrust the entrusted customized device approval workflow to a sales manager C.

Re-entrusting according to a process node: the trustee entrusts one of process nodes, the entrustments of which have been accepted by the trustee, to a user or a role acting as a secondary trustee; or the trustee entrusts a plurality of process nodes in process nodes, the entrustments of which have been accepted by the trustee, to one or more users or roles acting as secondary trustees, where each process node, the entrustment of which has been accepted by the trustee, can only be entrusted to one user or role acting as the secondary trustee.

For example, one approval workflow under all roles related to a user corresponding to Zhang San includes a process node A, a process node B, and a process node C; the process node A and the process node B may be entrusted to a sales supervisor A, and the process node C may be entrusted to a manager B. As the post responsibilities of the manager B have changed, roles related to a user corresponding to the manager B are increased. As a result, the manager B does not have time to process approval of the process node C, and the manager B may entrust the process node C to a manager D.

When the trustee carries out re-entrustment in one or more of the following modes: re-entrusting according to a user, re-entrusting according to a role, re-entrusting according to a form, re-entrusting according to an approval workflow, and re-entrusting according to a process node, related information on a corresponding initial entrustor is displayed. When the re-entrustment is carried out, the initial entrustor is displayed, to provide reference for selection of the next trustee.

When an entrustment relationship between the entrustor and the trustee is terminated, a corresponding entrustment relationship between the trustee and the secondary trustee is terminated, thus avoiding the chaotic situation that the corresponding entrustment relationship still exists between the trustee and the secondary trustee when the entrustment relationship between the entrustor and the trustee is terminated.

For example, there is the following entrustment relationship: an entrustor A entrusts a user A to a trustee B, the trustee B re-entrusts the user A to a trustee C, the trustee C re-entrusts the user A to a trustee D, and a trustee D re-entrusts the user A to a trustee E.

If the trustee B terminates the entrustment of the user A to the trustee C, the entrustment relationship between the trustee C and the trustee D, and the entrustment relationship between the trustee D and the trustee E are both terminated.

If the entrustor A terminates the entrustment of the user A to the trustee B, the entrustment relationship between the trustee B and the trustee C, the entrustment relationship between the trustee C and the trustee D, and the entrustment relationship between the trustee D and the trustee E are all terminated.

The reason of such processing is as follows: If processing is not done in this way, when the entrustor A terminates the entrustment of the user A to the trustee B, it is possible that the entrustor A can process work corresponding to the user A and the trustee E can also process work corresponding to the user A if the entrustment relationship between the trustee B and the trustee C, the entrustment relationship between the trustee C and the trustee D, and the entrustment relationship between the trustee D and the trustee E are not terminated, thus causing confusion of responsibilities.

When the trustee D re-entrusts the user A, the initial entrustor of the user A is displayed as an entrustor A, so as to provide the trustee D with reference for selection of the next trustee.

The above is only a preferred embodiment of the present invention, and it should be understood that the present invention is not limited to the forms disclosed herein, and is not to be construed as being limited to the other embodiments, but may be used in various other combinations, modifications and environments. Modification can be made by the techniques or knowledge of the above teachings or related art within the scope of the teachings herein. All changes and modifications made by those skilled in the art are intended to be within the protection scope of the appended claims.

## Claims

1. An approval workflow entrusting method, comprising one or more of the following modes:
entrusting according to a user: entrusting a user acting as an entrustor to a role acting as a trustee;
entrusting according to a role: entrusting a role related to a user acting as an entrustor to a user or a role acting as a trustee; or entrusting a plurality of roles related to a user acting as an entrustor to a user or a role acting as a trustee, wherein each role related to the user acting as the entrustor can only be entrusted to one user or role acting as the trustee;
entrusting according to a form: entrusting one form of all forms related to all roles that are related to a user acting as an entrustor to a user or a role acting as a trustee; or entrusting a plurality of forms of all forms related to all roles that are related to a user acting as an entrustor to one or more users or roles acting as trustees, wherein each form under all roles related to the user acting as the entrustor can only be entrusted to one user or role acting as the trustee;
entrusting according to an approval workflow: entrusting one approval workflow of all approval workflows related to all roles that are related to a user acting as an entrustor to a user or a role acting as a trustee; or entrusting a plurality of approval workflows of all approval workflows related to all roles that are related to a user acting as an entrustor to one or more users or roles acting as trustees, wherein each approval workflow under all roles related to the user acting as the entrustor can only be entrusted to one user or role acting as the trustee; and
entrusting according to a process node: entrusting one process node of all process nodes related to all approval workflows related to all roles that are related to a user acting as an entrustor to a user or a role acting as a trustee; or entrusting a plurality of process nodes of all process nodes related to all approval workflows related to all roles that are related to a user acting as an entrustor to one or more users or roles acting as trustees, wherein each process node related to all approval workflows related to all roles that are related to the user acting as the entrustor can only be entrusted to one user or role acting as the trustee.

2. The approval workflow entrusting method according to claim 1, wherein the entrusting step comprises: initiating entrustment: an entrustor initiates entrustment to/sends entrustment to/applies for entrustment from/requests entrustment from a trustee, wherein the entrustment initiation/sending/application/request comprises entrustment content and an entrustment start time; and
confirming the entrustment: the trustee confirms to accept or reject the entrustment according to information on the entrustment initiation/sending/application/request.

3. The approval workflow entrusting method according to claim 2, wherein the entrusting step further comprises withdrawing the entrustment initiation/sending/application/request: before the trustee confirms the entrustment, the entrustor withdraws the corresponding entrustment initiation/sending/application/request sent to the trustee.

4. The approval workflow entrusting method according to claim 1, wherein the role is an independent individual rather than a group or class, one role can only be related to a unique user during the same period, and one user is related to one or more roles; and
the user determines permissions through its relation to the role, one employee corresponds to one user account, and one user account corresponds to one employee.

5. The approval workflow entrusting method according to claim 4, wherein the role belongs to a certain department, and the role is authorized according to work content of the role; a name of the role is unique under the department, and a number of the role is unique in a system.

6. The approval workflow entrusting method according to claim 5, wherein during cross-department transfer of the user, the user's relation to the role in the original department is canceled, and the user is related to a role in a new department.

7. The approval workflow entrusting method according to claim 1, wherein the approval workflow comprises: one start process node initiating an approval process;
at least one approval process node setting an approval role and granting an approval permission to the corresponding approval role; and
one end process node, at which the approval process is ended.

8. A re-entrusting method for the approval workflow entrusting according to any one of claims 1 to 7, comprising one or more of the following modes:
re-entrusting according to a user: the trustee entrusts a user, the entrustment of which has been accepted by the trustee, to a role acting as a secondary trustee;
re-entrusting according to a role: the trustee entrusts one of roles, the entrustments of which have been accepted by the trustee, to a user or a role acting as a secondary trustee; or the trustee entrusts a plurality of roles in roles, the entrustments of which have been accepted by the trustee, to one or more users or roles acting as secondary trustees, wherein each role, the entrustment of which has been accepted by the trustee, can only be entrusted to one user or role acting as the secondary trustee;
re-entrusting according to a form: the trustee entrusts one of forms, the entrustments of which have been accepted by the trustee, to a user or a role acting as a secondary trustee; or the trustee entrusts a plurality of forms in forms, the entrustments of which have been accepted by the trustee, to one or more users or roles acting as secondary trustees, wherein each form, the entrustment of which has been accepted by the trustee, can only be entrusted to one user or role acting as the secondary trustee;
re-entrusting according to an approval workflow: the trustee entrusts one of approval workflows, the entrustments of which have been accepted by the trustee, to a user or a role acting as a secondary trustee; or the trustee entrusts a plurality of approval workflows in approval workflows, the entrustments of which have been accepted by the trustee, to one or more users or roles acting as secondary trustees, wherein each approval workflow, the entrustment of which has been accepted by the trustee, can only be entrusted to one user or role acting as the secondary trustee; and
re-entrusting according to a process node: the trustee entrusts one of process nodes, the entrustments of which have been accepted by the trustee, to a user or a role acting as a secondary trustee; or the trustee entrusts a plurality of process nodes in process nodes, the entrustments of which have been accepted by the trustee, to one or more users or roles acting as secondary trustees, wherein each process node, the entrustment of which has been accepted by the trustee, can only be entrusted to one user or role acting as the secondary trustee.

9. The re-entrusting method for the approval workflow entrusting according to claim 8, wherein when the trustee carries out re-entrustment in one or more of the following modes: re-entrusting according to a user, re-entrusting according to a role, re-entrusting according to a form, re-entrusting according to an approval workflow, and re-entrusting according to a process node, related information of a corresponding initial entrustor is displayed.

10. The re-entrusting method for the approval workflow entrusting according to claim 8, wherein when an entrustment relationship between the entrustor and the trustee is terminated, a corresponding entrustment relationship between the trustee and the secondary trustee is terminated.

11. An approval workflow entrusting method, comprising one or more of the following modes:
entrusting according to a user: entrusting a user acting as an entrustor to a role acting as a trustee;
entrusting according to a role: entrusting a role related to a user acting as an entrustor to a user or a role acting as a trustee; or entrusting a plurality of roles related to a user acting as an entrustor to a user or a role acting as a trustee;
entrusting according to a form: entrusting one form of all forms related to all roles that are related to a user acting as an entrustor to a user or a role acting as a trustee; or entrusting a plurality of forms of all forms related to all roles that are related to a user acting as an entrustor to one or more users or roles acting as trustees;
entrusting according to an approval workflow: entrusting one approval workflow of all approval workflows related to all roles that are related to a user acting as an entrustor to a user or a role acting as a trustee; or entrusting a plurality of approval workflows of all approval workflows related to all roles that are related to a user acting as an entrustor to one or more users or roles acting as trustees; and
entrusting according to a process node: entrusting one process node of all process nodes related to all approval workflows related to all roles that are related to a user acting as an entrustor to a user or a role acting as a trustee; or entrusting a plurality of process nodes of all process nodes related to all approval workflows related to all roles that are related to a user acting as an entrustor to one or more users or roles acting as trustees.
